(19) Europäisches Patentamt
European Patent Office
Office européen des brevets

(11) **EP 2 581 702 B1**

(12) **FASCICULE DE BREVET EUROPEEN**

(45) Date de publication et mention de la délivrance du brevet:
**17.06.2015 Bulletin 2015/25**

(51) Int Cl.:
**G01C 17/38** *(2006.01)* **G01C 21/16** *(2006.01)*
**G01P 21/00** *(2006.01)* **G01C 25/00** *(2006.01)*
**G01P 15/18** *(2013.01)*

(21) Numéro de dépôt: **12187915.9**

(22) Date de dépôt: **10.10.2012**

(54) **Procede d'identification d'axes de mesure defaillant d'un capteur triaxial**

Verfahren zur Identifizierung der fehlerhaften Messachsen eines dreiachsigen Sensors

Method for identifying faulty measurement axes of a triaxial sensor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2011 FR 1159161**

(43) Date de publication de la demande:
**17.04.2013 Bulletin 2013/16**

(73) Titulaire: **Commissariat à l'Énergie Atomique et aux Énergies Alternatives**
**75015 Paris (FR)**

(72) Inventeurs:
• **BERBRA, Cédric**
**38570 TENCIN (FR)**

• **LESECQ, Suzanne**
**38190 FROGES (FR)**

(74) Mandataire: **Colombo, Michel et al**
**Brevinnov**
**310 avenue Berthelot**
**69008 Lyon (FR)**

(56) Documents cités:
**FR-A1- 2 777 365**

• **NGUYEN H V ET AL: "Diagnosis of an Inertial Measurement Unit based on set membership estimation", CONTROL AND AUTOMATION, 2009. MED '09. 17TH MEDITERRANEAN CONFERENCE ON, IEEE, PISCATAWAY, NJ, USA, 24 juin 2009 (2009-06-24), pages 211-216, XP031490096, ISBN: 978-1-4244-4684-1**

**Description**

L'invention concerne un procédé et un dispositif d'identification d'axes de mesure défaillant d'un capteur triaxial fixé sur un objet mobile dans un repère fixe. L'invention a également pour objet un support d'enregistrement d'informations pour la mise en oeuvre de ce procédé.

Un capteur triaxial est un capteur capable de mesurer la direction, et généralement l'amplitude, dans un espace à trois dimensions d'un champ d'une grandeur physique. A cet effet, il comporte au moins trois axes de mesure non parallèles entre eux.

L'identification du ou des axes de mesure défaillant d'un capteur triaxial est, par exemple, utilisée dans des procédés de localisation de l'objet mobile. En effet, les mesures provenant d'axes de mesure défaillants sont alors écartées ou pondérées pour déterminer la position ou l'orientation de l'objet mobile.

Des procédés connus d'identification comporte :

- la mesure par un capteur triaxial $C_j$ fixé sur l'objet mobile d'un vecteur $b_{mj}$ donnant la direction d'un premier champ d'une grandeur physique au niveau d'un point de mesure dans un repère mobile fixé sans aucun degré de liberté à l'objet mobile,
- la mesure par un capteur triaxial $C_i$ fixé sur le même objet mobile d'un vecteur $b_{mi}$ donnant la direction d'un second champ d'une grandeur physique au niveau du même point de mesure dans le même repère mobile, les premier et second champs étant représentés, en tout point d'un espace de travail à l'intérieur duquel sont limités les déplacements de l'objet mobile, par des vecteurs, respectivement $r_j$ et $r_i$, donnant la direction du champ en ce point, ces premier et second champs étant tels que les produits scalaire et vectoriel, dans le repère fixe, des vecteurs $r_i$ et $r_j$ normalisés sont connus en tout point de cet espace de travail,
- la construction d'un vecteur $b_{ej}$ correspondant à l'estimation de la mesure du capteur $C_j$ au niveau du point de mesure sans utiliser la mesure $b_{mj}$,
- le calcul de la différence entre les vecteurs $b_{ej}$ et $b_{mj}$ pour obtenir un vecteur de résidus ayant pour coordonnées le long de chaque axe du repère mobile un résidu correspondant à la différence entre les coordonnées des vecteurs $b_{ej}$ et $b_{mj}$ sur cet axe du repère mobile, et
- l'identification du ou des axes de mesure du capteur $C_j$ présentant un défaut en fonction des résidus calculés sur chacun des axes du repère mobile.

Par « vecteur normalisé », on désigne ici un vecteur dont chaque coordonnée a été divisée par la norme de ce vecteur. La norme d'un vecteur est, par exemple, donnée par la norme euclidienne.

Par exemple, un tel procédé est divulgué dans le document suivant :

C. Berbra, S. Gentil et S. Lesecq, « Identification of multiple faults in an Inertial Measurement Unit », 7th Workshop on advanced control and diagnosis (ACD'2009), Zielona Gora, PI, Novembre 2009.

Dans ce document, les capteurs $C_i$ et $C_j$ sont, respectivement, des accéléromètres triaxiaux et des magnétomètres triaxiaux.

Pour construire le vecteur $b_{ej}$, il faut :

- disposer d'un modèle spécifique de l'objet mobile sous la forme d'un système d'équations qui relie entre elles les différentes mesures des capteurs fixés sur cet objet, et,
- avoir des mesures redondantes, c'est-à-dire que le nombre de mesures réalisées simultanément par les capteurs est strictement supérieur au nombre d'inconnues dans le système d'équations du modèle de l'objet mobile.

Dans ces conditions, à partir d'un nombre limité de mesures, il est possible d'estimer les autres mesures. Ensuite, les mesures estimées sont soustraites aux mesures véritablement réalisées pour identifier le ou les axes de mesure défaillants. Un axe de mesure est dit « défaillant » si l'erreur de mesure du champ le long de cet axe dépasse un seuil prédéterminé. La mesure le long de cet axe peut être perturbée par un perturbateur distinct de l'objet mobile. Par exemple, ce perturbateur peut être une masse métallique à proximité d'un des axes de mesure. L'axe de mesure peut également être considéré comme défaillant à cause d'une défaillance du capteur lui-même sur cet axe de mesure particulier.

Les procédés connus fonctionnent bien mais requièrent donc un modèle de l'objet et une redondance des mesures.

De l'état de la technique sont également connus les documents suivants:

- NGUYEN H V et Al : « Diagnosis of an inertial measurement unit based on set membership estimation », Control and Automation, 2009, Med « 09 », 17ième Mediteranean Conférence on, IEEE Piscataway, NJ, USA, 24 juin 2009, pages 211-216,
- FR2 777 365 A1.

Ces documents montrent également l'utilisation de modèles pour estimer les valeurs mesurées par les capteurs.

L'invention vise à proposer un procédé d'identification des axes de mesure défaillants d'un capteur triaxial qui ne nécessite pas de redondance entre les capteurs ou de disposer d'un modèle spécifique de l'objet reliant entre elles les différentes mesures.

Elle a donc pour objet un tel procédé dans lequel la construction du vecteur $b_{ej}$ est obtenue à partir :

- des produits scalaire et vectoriel des vecteurs $r_i$ et $r_j$, et
- de la mesure du vecteur $b_{mi}$,

de manière à ce que la direction du vecteur $b_{ej}$ par rapport au vecteur $b_{mi}$ soit identique à la direction du vecteur $r_j$ par rapport au vecteur $r_i$.

Les mesures $b_{mi}$ et $b_{mj}$ correspondent, respectivement, aux vecteurs $r_i$ et $r_j$, mais dans le repère mobile. La relation angulaire entre les vecteurs $r_i$ et $r_j$ est connue dans le repère fixe. Par conséquent, si les mesures $b_{mi}$ et $b_{mj}$ sont saines, c'est-à-dire dépourvues de défaut détectable, alors la relation angulaire entre les vecteurs $b_{mi}$ et $b_{mj}$ est la même que la relation angulaire entre les vecteurs $r_i$ et $r_j$. En utilisant cette propriété, il est possible de construire l'estimation $b_{ej}$ sans qu'il soit nécessaire pour cela de disposer d'un modèle spécifique de l'objet mobile qui relie entre elles les différentes mesures des capteurs $C_i$ et $C_j$. Ainsi, ce procédé peut être utilisé avec n'importe quel objet mobile sans avoir au préalable de connaissance sur la géométrie ou les propriétés de cet objet.

De plus, il n'est pas non plus nécessaire qu'il existe une redondance entre les mesures des capteurs $C_i$ et $C_j$. Enfin, ce procédé permet d'identifier l'axe de mesure du capteur triaxial qui est défaillant et non pas seulement le fait que ce capteur est défaillant.

Les modes de réalisation de ce procédé peuvent comporter une ou plusieurs des caractéristiques suivantes :

■ l'identification du ou des axes de mesure défaillant comporte la transformation de chaque coordonnée du vecteur de résidus en une valeur booléenne codable sur un seul bit d'information en appliquant le test d'hypothèse de Neyman-Pearson pour obtenir un vecteur de symptôme, cette valeur booléenne indiquant dans un état la présence d'un défaut et dans l'autre état l'absence de défaut ;

■ l'estimation du vecteur $b_{ej}$ est construite à partir des relations suivantes :

- $r_i.r_j = b_{mi} . b_{ej}$, et
- $\|r_i \wedge r_j\| = \| b_{min} \wedge b_{ej}\|$,
- $\|b_{ej}\| = \|r_j\|$ lorsque le premier champ de grandeur physique est tel que la norme $\|r_j\|$ est constante en tout point de l'espace de travail, ou $\|b_{ej}/b_{mi}\| = \|r_j/r_i\|$ lorsque les premier et second champs de grandeur physique sont tels que le rapport des amplitudes des vecteurs $r_i$ et $r_j$ en tout point de l'espace de travail est constant.
  où :
- le symbole «.» est la fonction produit scalaire,
- le symbole $\wedge$ est la fonction produit vectoriel, et
- le symbole $\|...\|$ la norme euclidienne du vecteur ;

■ les axes du repère mobile sont confondus avec les axes de mesure du capteur $C_j$;

■ le procédé comporte :

- la vérification de la relation suivante : $\|r_i\| = \|b_{mi}\|$ à $\pm\varepsilon \|r_i\|$ près, où $\varepsilon$ est une constante inférieure ou égale à 0,25 et $\|...\|$ désigne la norme du vecteur, et
- si cette relation n'est pas vérifiée, l'inhibition systématique de la construction du vecteurs $b_{ej}$ à partir des produits scalaire et vectoriel des vecteurs $r_i$ et $r_j$ et de la mesure du vecteur $b_{mi}$ et, dans le cas contraire, la construction du vecteurs $b_{ej}$ ;

■ les premier et second champs sont des champs de deux grandeurs physiques différentes ou les premier et second champs sont les mêmes champs de la même grandeur physique;

■ les premier et second champs sont choisis dans le groupe composé du champ magnétique terrestre et du champ de gravité ;

■ les mesures par les capteurs $C_j$ et $C_i$ consiste à mesurer, respectivement, des premier et second champs tels que les produits scalaire et vectoriel, dans le repère fixe, des vecteurs $r_i$ et $r_j$ normalisés sont identiques en tout point de l'espace de travail.

Les modes de réalisation de ce procédé présentent en outre les avantages suivants :

- la transformation des coordonnées du vecteur de résidus en valeurs booléennes pour identifier le ou les axes de mesure défaillants, accroît la fiabilité de la détection de l'axe de mesure défaillant,
- la mesure de premier et second champs tels que les vecteurs $r_i$ et $r_j$ normalisés sont identiques en tout point de l'espace de travail évite d'avoir à connaître la position ou les déplacements de l'objet mobile dans l'espace de travail.

L'invention a également pour objet un support d'enregistrement d'informations comportant des instructions pour l'exécution du procédé ci-dessus lorsque ces instructions sont exécutées par un calculateur électronique.

Enfin, l'invention a aussi pour objet un dispositif d'identification d'axes de mesure défaillants d'un capteur triaxial $C_j$ fixé sur un objet mobile dans un repère fixe, ce capteur triaxial $C_j$ mesurant un vecteur $b_{mj}$ donnant la direction d'un premier champ d'une grandeur physique au niveau d'un point de mesure dans un repère mobile fixé sans aucun degré de liberté à l'objet mobile, ce dispositif comportant :

- un capteur triaxial $C_i$ destiné à être fixé sur le même objet mobile, ce capteur triaxial $C_i$ étant apte à mesurer un vecteur $b_{mi}$ donnant la direction d'un second champ d'une grandeur physique au niveau du même point de mesure dans le même repère mobile, les premier et second champs étant représentés, en tout point d'un espace de travail à l'intérieur duquel sont limités les déplacements de l'objet mobile, par des vecteurs, respectivement $r_j$ et $r_i$, donnant la direction du champ en ce point, ces premier et second champs étant tels que les produits scalaire et vectoriel, dans le repère fixe, des vecteurs $r_i$ et $r_j$ normalisés sont connus en tout point de cet espace de travail,

- une unité (12) électronique de traitement apte à acquérir les mesures des capteurs $C_i$ et $C_j$, cette unité de traitement étant programmée pour :

   • construire un vecteur $b_{ej}$ correspondant à l'estimation de la mesure du capteur $C_j$ au niveau du point de mesure sans utiliser la mesure $b_{mj}$,
   • calculer la différence entre les vecteurs $b_{ej}$ et $b_{mj}$ pour obtenir un vecteur de résidus ayant pour coordonnées le long de chaque axe du repère mobile un résidu correspondant à la différence entre les coordonnées des vecteurs $b_{ej}$ et $b_{mj}$ sur cet axe du repère mobile,
   • identifier le ou les axes de mesure du capteur $C_j$ présentant un défaut en fonction des résidus calculés sur chacun des axes du repère mobile, et
   • construire le vecteur $b_{ej}$ à partir :

      - des produits scalaire et vectoriel des vecteurs $r_i$ et $r_j$, et
      - de la mesure du vecteur $b_{mi}$, de manière à ce que la direction du vecteur $b_{ej}$ par rapport au vecteur $b_{mi}$ soit identique à la direction du vecteur $r_j$ par rapport au vecteur $r_i$.

L'invention sera mieux comprise à la lecture de la description qui va suivre, donnée uniquement à titre d'exemple non limitatif et faite en se référant aux dessins sur lesquels :

- la figure 1 est une illustration schématique d'un système de détermination de l'orientation d'un objet mobile,
- la figure 2 est un organigramme d'un procédé d'identification d'un axe de mesure défaillant et de détermination de l'orientation de l'objet mobile de la figure 1, et
- les figures 3 à 8 sont des graphes représentant différents résultats expérimentaux obtenus à l'aide du procédé de la figure 2.

Dans ces figures, les mêmes références sont utilisées pour désigner les mêmes éléments.

Dans la suite de cette description, les caractéristiques et fonctions bien connues de l'homme du métier ne sont pas décrites en détail.

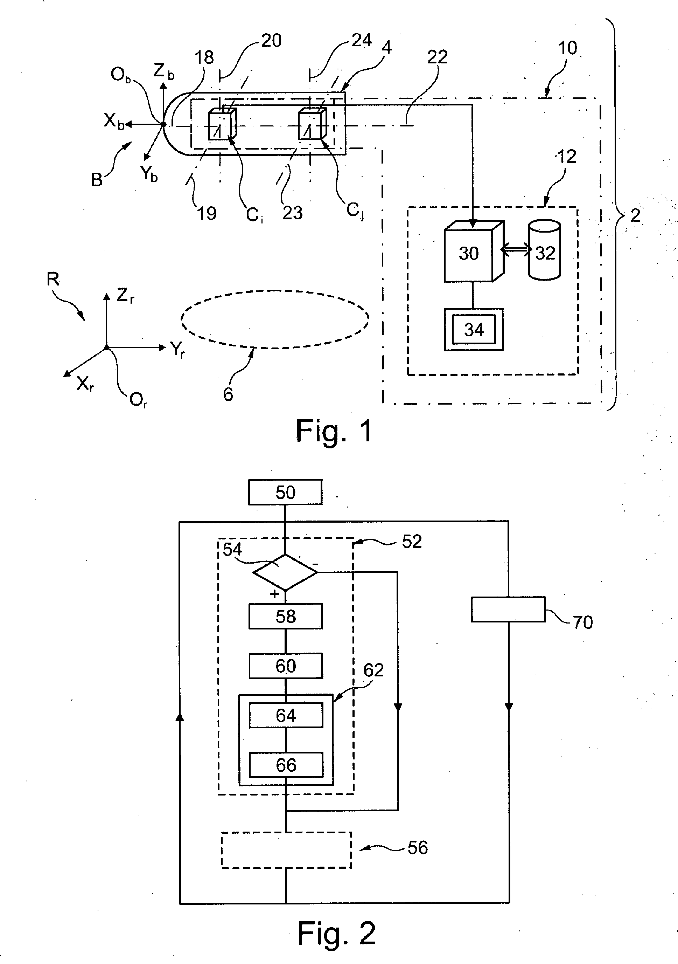

La figure 1 représente un système 2 de détermination de l'orientation d'un objet mobile 4 dans un repère fixe R. L'orientation est également connue sous le terme de « attitude ».

Le repère fixe R est défini par trois axes $X_r$, $Y_r$ et $Z_r$ orientés et orthogonaux entre eux. De préférence, le repère R est orthonormé. Ces axes se coupent en un point Or formant l'origine du repère R. Le point Or est lié, sans aucun degré de liberté à la terre.

L'objet mobile 4 est susceptible de se déplacer dans le repère fixe R. A cet effet, il est équipé de ses propres moyens de propulsion tels qu'un moteur ou déplacé par des moyens de propulsion externes à l'objet 4. Par exemple, l'objet 4 est un cathéter destiné à être introduit dans un corps humain.

L'objet 4 se déplace uniquement à l'intérieur d'un espace de travail prédéterminé 6. L'espace de travail 6 est typiquement un espace à trois dimensions. Pour simplifier sa représentation dans la figure 1, il a uniquement été représenté par un ovale en pointillés. L'espace de travail 6 est lié sans aucun degré de liberté au repère R.

Un repère mobile B est lié, sans aucun degré de liberté, à l'objet 4. Ce repère B, de préférence orthonormé, est défini par trois axes $X_b$, $Y_b$ et $Z_b$ orientés et orthogonaux entre eux. L'origine de ce repère B est noté $O_b$.

Le système 2 comporte une centrale inertielle 10 fixée sans aucun degré de liberté à l'objet mobile 4. Cette centrale 10 mesure l'orientation de l'objet mobile 4 dans le repère fixe R. Plus précisément, cette centrale 10 permet de mesurer l'inclinaison de l'objet mobile 4 par rapport à chacun des axes $X_r$, $Y_r$ et $Z_r$ du repère R.

A cet effet, la centrale inertielle 10 est équipée de deux capteurs $C_i$ et $C_j$ raccordés à une unité de traitement 12.

Dans ce mode de réalisation, les capteurs $C_i$ et $C_j$ sont, respectivement, un accéléromètre triaxial et un magnétomètre triaxial.

Ces capteurs $C_i$ et $C_j$ sont fixes dans le repère B.

Le capteur $C_i$ mesure la projection orthogonale de l'accélération de l'objet 4 sur trois axes 18 à 20 de mesure non parallèles entre eux. Ici, ces axes 18 à 20 sont orthogonaux entre eux. Pour simplifier, les axes 18 à 20 sont parallèles, respectivement, aux axes $X_b$, $Y_b$ et $Z_b$ du repère B. Le capteur $C_i$ permet de mesurer directement la direction et l'amplitude de l'accélération de l'objet 4 dans le repère B. Par directement, on désigne ici le fait qu'il n'est pas nécessaire de connaître l'orientation du repère B par rapport au repère R pour obtenir cette mesure. Le capteur $C_i$ mesure, notamment, l'amplitude et la direction du champ de gravité terrestre. Ici, les termes « amplitude » et « intensité » sont utilisés comme des synonymes.

La mesure du capteur $C_i$ est notée sous la forme d'un vecteur $b_{mj}$ à trois coordonnées $b_{xmi}$, $b_{ymi}$ et $b_{zmi}$, où les coordonnées $b_{xmi}$, $b_{ymi}$ et $b_{zmi}$ correspondent aux intensités de l'accélération mesurées, respectivement, le long des axes 18 à 20.

Le capteur $C_j$ mesure la projection orthogonale d'un champ magnétique statique, c'est-à-dire d'un champ magnétique ayant une fréquence nulle, présent au niveau de l'objet 4 sur trois axes 22 à 24 de mesure non parallèles entre eux. Ici, ces axes 22 à 24 sont parallèles, respectivement, aux axes $X_b$, $Y_b$ et $Z_b$. Ce capteur $C_j$ mesure directement la direction et l'amplitude du champ magnétique statique dans le repère B. Il mesure donc notamment la direction et l'amplitude du champ magnétique terrestre.

Cette mesure du capteur $C_j$ est notée sous la forme d'un vecteur $b_{mj}$ à trois coordonnées $b_{xmj}$, $b_{ymj}$ et $b_{zmj}$, où les coordonnées $b_{xmj}$, $b_{ymj}$ et $b_{zmj}$ correspondent aux intensités du champ magnétique statique mesurées, respectivement, le long des axes 22 à 24.

On note également sous la forme de vecteurs $r_i$ et $r_j$ les mesures, respectivement, du champ de gravité et du champ magnétique terrestre dans le repère R. Comme pour les vecteurs $b_{mi}$ et $b_{mj}$, ces deux vecteurs $r_i$ et $r_j$ ont chacun trois coordonnées, respectivement, $(r_{xi}, r_{yi}, r_{zi})$ et $(r_{xj}, r_{yj}, r_{zj})$. Les coordonnées $r_{xi}$, $r_{yi}$ et $r_{zi}$ correspondent aux mesures de l'intensité du champ de gravité terrestre, respectivement, le long des axes $X_r$, $Y_r$ et $Z_r$. Les coordonnées $r_{xj}$, $r_{yj}$ et $r_{zj}$ correspondent aux mesures de l'intensité du champ magnétique terrestre, respectivement, le long des axes $X_r$, $Y_r$ et $Z_r$.

L'espace de travail 6 est suffisamment limité pour que l'on puisse considérer que la relation angulaire entre les vecteurs $r_i$ et $r_j$ est identique en tout point de cet espace de travail. Cela se traduit notamment par le fait qu'en tout point de l'espace de travail 6, les deux relations suivantes sont vérifiées :

(1)

$$r_{ni} . r_{nj} = \alpha$$

(2)

$$\|r_{ni} \wedge r_{nj}\| = \beta$$

où :

- $r_{ni}$ et $r_{nj}$ sont les vecteurs normalisés des vecteurs $r_i$ et $r_j$,
- le symbole «.» est la fonction produit scalaire,
- le symbole $\wedge$ est la fonction produit vectoriel,
- le symbole $\|x\|$ est la norme euclidienne du vecteur x, et
- $\alpha$ et $\beta$ sont des constantes indépendantes du point de l'espace 6 pris en compte.

Lorsque les deux relations précédentes sont vérifiées, on dit que les champs sont des champs de référence et que les vecteurs $r_i$ et $r_j$ sont des vecteurs de référence.

De plus, ici, l'espace de travail 6 est suffisamment limité pour que l'on puisse également considérer que les normes des vecteurs $r_i$ et $r_j$ sont identiques en tout point de l'espace 6. Ainsi, les relations suivantes sont également vérifiées :

(3)

$$r_i . r_j = A$$

(4)

$$\|r_i \wedge r_j\| = B,$$

où A et B sont des constantes.

Avec ces hypothèses et notations, lorsque l'objet 4 est dans un état quasi statique, les vecteurs $b_{mi}$ et $b_{mj}$ correspondent, respectivement, aux vecteurs $r_i$ et $r_j$ mais exprimés dans le repère B au lieu du repère R.

Par quasi statique, on désigne ici le fait que la contribution de l'accélération propre de l'objet 4 dans la mesure $b_{mi}$ est négligeable devant le champ de gravité terrestre. Par exemple, l'objet 4 est considéré comme étant dans l'état quasi statique si $\|r_i\| = \|b_{mi}\|$ à $\pm\varepsilon\|b_{mi}\|$ près, où $\varepsilon$ est une constante. La valeur de $\varepsilon$ dépend de l'application envisagée. Par exemple, la valeur de $\varepsilon$ est inférieure ou égale à 0,25 et de préférence inférieure ou égale à 0,1 ou 0,05 ou 0,01.

Dans ces conditions, lorsque l'objet 4 est dans l'état quasi statique et si aucun des axes de mesure des capteurs $C_i$ et $C_j$ n'est défaillant, alors la relation angulaire entre les vecteurs $b_{mi}$ et $b_{mj}$ est la même que la relation angulaire entre les vecteurs $r_i$ et $r_j$. Cette propriété est exploitée par l'unité de traitement 12 pour identifier un ou plusieurs axes de mesure défaillants des capteurs $C_i$ et $C_j$.

L'unité de traitement 12 est capable de traiter les mesures $b_{mj}$ et $b_{mi}$ pour en déduire l'orientation de l'objet 4 dans le repère fixe R. Elle est également capable d'identifier un ou plusieurs axes de mesure défaillants des capteurs $C_i$ et $C_j$ à partir des mesures des vecteurs $b_{mj}$ et $b_{mi}$. L'unité 12 peut être fixée ou non à l'objet 4. Ici, elle est décrite dans le cas particulier où elle est fixée sans aucun degré de liberté à l'objet 4. Toutefois, pour simplifier la figure 1, elle a été représentée en dehors de l'objet 4.

Par exemple, cette unité de traitement 12 est formée par un calculateur électronique programmable 30 apte à exécuter des instructions enregistrées sur un support d'enregistrement d'informations. A cet effet, le calculateur 30 est raccordé à une mémoire 32 contenant les données et instructions nécessaires pour l'exécution du procédé de la figure 2.

De plus, ici, l'unité de traitement comporte aussi une interface homme machine 34, tel qu'un écran, raccordée au calculateur 30 pour indiquer à un être humain quels sont le ou les axes de mesure défaillants des capteurs $C_i$ et $C_j$.

La combinaison de l'un des capteurs $C_i$, $C_j$ et de l'unité de traitement 12 forme un dispositif d'identification d'axes de mesure défaillants de l'autre de ces capteurs.

Le fonctionnement du système 2 va maintenant être décrit plus en détail en référence au procédé de la figure 2.

Le procédé débute par une étape 50 de calibration. Lors de cette étape 50, l'objet 4 est maintenu immobile dans le repère fixe R dans une orientation connue par rapport au repère R. Puis, les vecteurs $r_i$ et $r_j$ sont mesurés à l'aide des capteurs $C_i$ et $C_j$ et leurs coordonnées sont exprimées dans le repère R. Lors de cette étape de calibration, on suppose qu'aucun des axes de mesure de ces capteurs n'est défaillant.

Ensuite, il est procédé à une phase 52 d'identification d'axes de mesure défaillant du capteur $C_j$.

Cette phase débute par une étape 54 de mesure des vecteurs $b_{mi}$ et $b_{mj}$ puis de vérification que le capteur $C_i$ est utilisable. Lors de cette étape, on recherche uniquement à vérifier que le capteur $C_i$ est utilisable pour identifier la défaillance d'un des axes de mesure du capteur $C_j$. Ce capteur $C_i$ est considéré comme utilisable s'il n'est ni défaillant, ni en dehors de l'état quasi statique. Ainsi, ici, on ne recherche pas à identifier lors de cette étape 52 le ou les axes de mesure défaillants du capteur $C_i$.

Par exemple, dans ce mode de réalisation, le capteur $C_i$ est considéré comme utilisable si la relation suivante (5) est vérifiée à $\pm\varepsilon\|r_i\|$ près, où $\varepsilon$ est une constante prédéterminée en fonction de l'application envisagée. Par exemple, la valeur de $\varepsilon$ est inférieure ou égale à 0,25 et de préférence inférieure ou égale à 0,1 ou 0,05 ou 0,01 :

(5)

$$\|r_i\| = \|b_{mi}\|,$$

où $\|...\|$ désigne la norme du vecteur.

Si le capteur $C_i$ n'est pas considéré comme étant utilisable, alors on procède directement à une phase 56 d'identification d'axes de mesure défaillant du capteur $C_j$.

Dans le cas contraire, lors d'une étape 58, le calculateur 30 construit un vecteur $b_{ej}$ qui correspond à l'estimation de la mesure du capteur $C_j$ qui serait obtenue en absence de défaut sur tous les axes de mesure. Cette estimation est construite sans utiliser la mesure $b_{mj}$, ni un modèle de l'objet 4, ni la position ou l'orientation de l'objet 4 dans le repère R. Pour cela, on utilise la propriété selon laquelle la relation angulaire entre les vecteurs $b_{ej}$ et $b_{mi}$ est identique à la relation angulaire entre les vecteurs $r_j$ et $r_i$ en absence de défaut sur les axes de mesure du capteur $C_j$. De plus, ici, les normes des vecteurs $b_{ej}$ et $b_{mi}$ doivent être identiques aux normes, respectivement, des vecteurs $r_j$ et $r_i$. La conservation de la relation angulaire et de la norme permet d'écrire le système d'équations suivant :

(6)

$$r_j \cdot r_i = b_{ej} \cdot b_{mi}$$

(7)

$$\|r_j \wedge r_i\| = \|b_{ej} \wedge b_{mi}\|$$

(8)

$$\|r_j\| = \|b_{ej}\|$$

La résolution de ce système d'équations permet d'obtenir les coordonnées du vecteur $b_{ej}$. Par exemple, pour trouver les coordonnées du vecteur $b_{ej}$, on recherche les coordonnées du vecteur $b_{ej}$ qui minimisent les relations suivantes à l'aide de la méthode des moindres carrés :

(9)

$$r_j \cdot r_i - b_{ej} \cdot b_{mi}$$

(10)

$$\|r_j \wedge r_i\| - \|b_{ej} \wedge b_{mi}\|$$

(11)

$$\|r_j\| - \|b_{ej}\|.$$

Une fois que le vecteur $b_{ej}$ a été construit, lors d'une étape 60, le calculateur 30 calcule un vecteur $V_{rj}$ de résidus. Ce vecteur $V_{rj}$ est défini par la relation suivante :

(12)

$$V_{rj} = b_{ej} - b_{mj}.$$

Chaque coordonnée du vecteur $V_{rj}$ est donc un résidu qui est fonction de la différence entre les coordonnées des vecteurs $b_{ej}$ et $b_{mj}$ sur le même axe du repère B.

S'il n'existe aucun défaut sur les axes de mesure du capteur $C_j$, alors les coordonnées du vecteur $V_{rj}$ doivent être égales à zéro à une marge d'erreur près liée notamment au bruit sur les mesures des vecteurs $b_{mj}$ et $b_{mi}$.

Lors d'une étape 62, le calculateur 30 identifie le ou les axes de mesure défaillants du capteur $C_j$ à partir du vecteur de résidus $V_{rj}$.

Par exemple, lors d'une opération 64, le calculateur 30 transforme le vecteur $V_{rj}$ en un vecteur $V_{sj}$ de symptômes. Pour cela, chaque coordonnée du vecteur $V_{rj}$ est transformée en une valeur booléenne en appliquant un test d'hypothèse. Ici, le test d'hypothèse utilisé est le test de Neyman-Pearson. Ce test de Neyman-Pearson est par exemple décrit dans les documents suivants :

> Michèle Basseville, Igor V. Nikiforov, « Detection of Abrupt Changes - Theory and Application », Prentice-Hall, Inc., ISBN 0-13-126780-9 - April 1993 - Englewood Cliffs,
> N.J., (voir en particulier le chapitre 4.2 et le théorème du chapitre 4.2.1) S. Lesecq, « Chapitre 2. Traitement du signal pour le diagnosric » dans « Supervision des procédés complexes », Lavoisier, 2007.

Par exemple, les différents paramètres du test sont choisis comme suit :

- Hypothèse $H_0$ : la valeur moyenne en absence de défaut est fixée à 0,
- Hypothèse $H_1$ : la valeur moyenne en présence d'un défaut est supérieure ou égale à 0,1, et
- la probabilité de fausse alarme est prise égale à 5 %.

Ensuite, lors d'une opération 66, le calculateur 30 compare le vecteur de symptôme $V_{sj}$ à une table de signatures de défauts. La table de signatures de défaut est par exemple la table suivante :

| Défaut/Symptôme | $f_{mx}$ | $f_{my}$ | $f_{mz}$ |
|---|---|---|---|
| $S_{xj}$ | 1 | 0 | 0 |
| $S_{yj}$ | 0 | 1 | 0 |
| $S_{zj}$ | 0 | 0 | 1 |

Les colonnes $f_{mx}$, $f_{my}$ et $f_{mz}$ correspondent à des défauts, respectivement, sur les axes de mesure 22 à 24. Les lignes $S_{xj}$, $S_{yj}$ et $S_{zj}$ correspondent aux coordonnées du vecteur $V_{sj}$ sur les axes $X_b$, $Y_b$ et $Z_b$.

Dans ce tableau, un symbole « 1 » dans l'une des colonnes $f_{mx}$, $f_{my}$ et $f_{mz}$ signifie que l'on a un défaut sur l'axe de mesure correspondant. Au contraire, un symbole « 0 » signifie qu'il n'existe pas de défaut sur l'axe de mesure correspondant.

Ainsi, le symptôme (1, 0, 0) est interprété à partir de cette table de signatures comme signifiant que seul l'axe de mesure 22 est défaillant.

Dans un autre exemple, le symptôme (1, 1, 0) signifie que seuls les axes de mesure 22 et 23 du capteur $C_j$ sont défaillants.

Après avoir procédé à la phase 52, à l'issue de l'étape 62, le calculateur exécute la phase 56 d'identification d'axes de mesure défaillants du capteur $C_i$. Cette phase 56 est par exemple réalisée de façon similaire à la phase 52. Par exemple, la phase 56 est réalisée comme la phase 52 précédemment décrite mais en remplaçant l'indice i par l'indice j et vice versa. Lors de la phase 56, la table de signatures indique les défauts sur les axes 22 à 24 à partir du vecteur de symptôme $V_{si}$.

On notera également que si les deux capteurs $C_i$ et $C_j$ sont considérés comme « non utilisables » lors de l'étape 54, alors il n'est pas possible d'identifier précisément le ou les axes de mesure défaillants. Dans ce cas, le calculateur 30 indique seulement que les capteurs $C_i$ et $C_j$ sont défaillants sans préciser les axes de mesure défaillants.

Les phases 52 et 56 sont réitérées à intervalles réguliers. En parallèle, lors d'une étape 70, les informations sur les axes de mesure défaillants sont prises en compte par le calculateur 30 lors de la détermination de l'orientation de l'objet 4. Par exemple, en réponse à l'identification d'un ou plusieurs axes de mesure défaillants, l'orientation de l'objet 4 est déterminée sans utiliser les mesures sur le ou les axes de mesure défaillants. Il est aussi possible d'utiliser les mesures réalisées sur les axes défaillants mais en affectant à ces mesures un coefficient de pondération qui leur donne moins de poids dans la détermination de l'orientation de l'objet 4.

En réponse à l'identification d'un ou plusieurs axes de mesure défaillants, le calculateur 30 informe également l'utilisateur du système 2 par le biais de l'interface homme machine 34 de l'existence de ces axes défaillants.

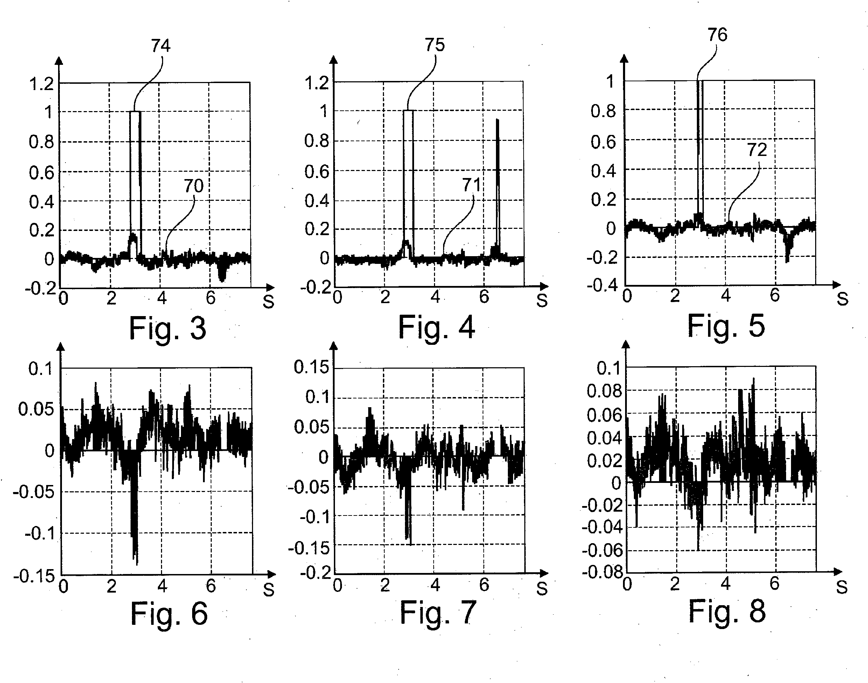

Les figures 3 à 5 représentent par des courbes, respectivement 70 à 72 l'évolution au cours du temps de chacune des coordonnées du vecteur de résidus $V_{ri}$. Sur ces mêmes graphes, des courbes 74 à 76 représentent l'évolution des coordonnées du vecteur de symptôme $V_{si}$. L'axe des abscisses de ces graphes est gradué en secondes.

Ces courbes ont été obtenues dans le cas particulier où un défaut apparaît simultanément sur les trois axes de mesure du capteur $C_i$ entre la deuxième et la quatrième seconde. Plus tard, un défaut apparaît sur l'axe de mesure 23 après la sixième seconde (voir figure 4).

Les figures 6 à 8 représentent l'évolution au cours du temps des coordonnées du vecteur résidu $V_{rj}$, respectivement, le long des axes 18 à 20 pendant la même période que celle des figures 3 à 4.

Comme le montrent ces graphes obtenus par simulation numérique, le procédé décrit en réponse à la figure 2 permet de détecter et d'identifier simultanément plusieurs axes de mesure défaillants aussi bien qu'un seul axe de mesure défaillant.

De nombreux autres modes de réalisation sont possibles. Par exemple, seule la relation angulaire entre les vecteurs $b_{mi}$, $b_{mj}$, $r_i$ et $r_j$ est utilisée et non pas la relation entre les normes de ces vecteurs. Pour cela, dans les relations (6) à (8), on utilise les vecteurs normalisés $b_{nmj}$, $b_{nmi}$, $r_{nj}$ et $r_{ni}$ à la place des vecteurs non normalisés, respectivement, $b_{mj}$, $b_{mi}$, $r_j$ et $r_i$. La relation (8) s'écrit alors : $\| b_{ej} \| = 1$. Dans ce mode de réalisation, il n'est pas nécessaire que les capteurs $C_i$ et $C_j$ mesure l'amplitude du champ de la grandeur physique en plus de sa direction. De plus, la norme des vecteurs $r_i$ et/ou $r_j$ n'a pas besoin d'être constante en tout point de l'espace de travail.

La relation (8) peut également être remplacée par la suivante : $\|b_{ej}\|/\| b_{mi}\| = \|r_j\|/\|r_i\|$ lorsque le rapport des amplitudes des vecteurs $r_i$ et $r_j$ en tout point de l'espace de travail est constant.

Dans un autre mode de réalisation, il n'est pas nécessaire que les produits scalaire et vectoriel des vecteurs $r_i$ et $r_j$ soient constants en tout point de l'espace de travail. En fait, il suffit que les valeurs de ces produits soient connues en tout point de l'espace de travail. Dans ce cas, par exemple, une table pré-enregistrée associe aux coordonnées x, y, z de chaque point de l'espace de travail, les valeurs $\alpha(x,y,z)$ et $\beta(x,y,z)$, respectivement, des produits scalaire et vectoriel des vecteurs $r_i$ et $r_j$. Ensuite, lors de l'identification de l'axe défaillant du capteur $C_j$, les relations suivantes sont utilisées, à la place des relations (8), (9) et (10) pour estimer le vecteur $b_{ej}$:

$$\alpha(x,y,z) - b_{ej} \cdot b_{mi}$$

$$\beta(x,y,z) - \| b_{ej} \wedge b_{mi} \|$$

$$\| r_j \| - \| b_{ej} \|$$

Les valeurs $\alpha(x,y,z)$ et $\beta(x,y,z)$ sont obtenues à partir de la connaissance de la position de l'objet mobile et de la table pré-enregistrée. Il existe différente façon de connaître la position de l'objet mobile. Par exemple, cette position peut être mesurée à l'aide d'autres capteurs. On peut aussi prévoir de positionner l'objet mobile en un point connu de l'espace de travail puis de mettre en oeuvre le procédé d'identification d'axe défaillant uniquement lorsque l'objet mobile est situé en ce point connu de l'espace. Dans cette variante, de préférence, les vecteurs normalisés sont utilisés.

Il existe d'autres champs de référence que le champ magnétique terrestre et le champ de gravité terrestre. Par exemple, un capteur d'étoile permet de mesurer la direction dans laquelle se trouve une étoile. La direction mesurée est fixe et la même en tout point d'un repère fixe. Par exemple, le repère fixe est dans ce cas-là un référentiel géocentrique. Un tel capteur d'étoile est par exemple décrit plus en détail dans l'article suivant :

W. H. Steyn, M. J. Jacobs et P. J. Oosthuizen, « A High Performance Star Sensor System for Full Attitude Determination on a Microsatellite », Department of Electronic Engineering, University of Stellenbosch, Stellenbosch 7600, Afrique du Sud.

Le champ de référence peut également être généré artificiellement, par exemple, à partir d'un aimant permanent ou d'une bobine électrique placé dans l'espace de travail.

Tous les champs de référence peuvent être identiques et donc les vecteurs $r_i$ et $r_j$ peuvent être identiques. Par exemple, dans un mode de réalisation simplifié, un seul et même champ de référence est utilisé. Dans ce cas, les capteurs $C_i$ et $C_j$ mesurent le même champ. Les axes de mesures de ces deux capteurs identiques ne sont pas nécessairement parallèles entre eux. Ainsi, les capteurs $C_i$ et $C_j$ peuvent être tous les deux des accéléromètres.

Il n'est pas nécessaire que les capteurs $C_i$ et $C_j$ soient tous les deux fixes dans le repère mobile B. En effet, l'un des deux capteurs peut être mobile par rapport à l'autre dans le repère mobile B. Dans ce cas, à chaque instant, l'orientation du capteur mobile dans le repère mobile doit être connue pour pouvoir transformer sa mesure en un vecteur exprimé dans le repère mobile.

D'autres méthodes d'identification des axes de mesure défaillants à partir du vecteur de résidus sont possibles. Par exemple, en variante, lorsque l'une des coordonnées du vecteur de résidus franchit un seuil prédéterminé, l'axe de mesure correspondant à cette coordonnée est considéré comme défaillant.

En variante, les axes du repère mobile ne sont pas confondus avec les axes de mesure. Ce mode de réalisation peut être facilement ramené au cas du mode de réalisation décrit ici par un simple changement de repère.

D'autres méthodes de calcul du vecteur de résidus sont possibles.

La comparaison du vecteur de résidus à la table de signatures peut être réalisée différemment. Par exemple, pour chaque axe de mesure, la table de signatures spécifie un seuil Si pour chaque coordonnée du vecteur de résidus sur cet axe. Si ce seuil est franchi, alors l'axe de mesure est considéré comme défaillant.

Les capteurs triaxiaux peuvent avoir plus de trois axes de mesure. Dans ce cas, les vecteurs n'ont pas trois coordonnées mais autant de coordonnées que d'axes de mesure.

Le mode de réalisation précédent a été décrit dans le cas particulier où c'est l'objet mobile qui se déplace dans le repère fixe. Toutefois, le procédé décrit s'applique dès que l'un des deux repères se déplace par rapport à l'autre.

De même, il n'est pas nécessaire que les axes de mesure des capteurs $C_i$ et $C_j$ soient parallèles entre eux. On peut également se ramener à cette situation par un simple changement de repère.

Ce qui a été décrit dans le cas particulier de deux capteurs triaxiaux s'applique également au cas de N capteurs triaxiaux, où N est un entier supérieur ou égal à deux. Dans ce cas, chaque capteur triaxial doit être capable de mesurer son propre champ de référence d'une grandeur physique et il faut disposer d'au moins N vecteurs de référence, c'est-à-dire d'un vecteur de référence pour chaque capteur. Dans ce cas, de préférence, le vecteur $b_{ej}$ est construit à partir des mêmes relations angulaires que précédemment décrite mais exprimées pour chacun des capteurs $C_i$ d'un groupe de K capteurs, où K est un nombre entier supérieur ou égal à deux contenant uniquement des capteurs considérés comme « utilisables ».

Le procédé d'identification d'un axe de mesure défaillant peut trouver à s'appliquer dans un grand nombre de domaines techniques tels que la reconstruction de mouvements humains ou l'orientation de satellites.

**Revendications**

1. Procédé d'identification d'axes de mesure défaillants d'un capteur triaxial fixé sur un objet mobile dans un repère fixe, ce procédé comportant :

   - la mesure (54) par un capteur triaxial $C_j$ fixé sur l'objet mobile d'un vecteur $b_{mj}$ donnant la direction d'un premier champ d'une grandeur physique au niveau d'un point de mesure dans un repère mobile fixé sans aucun degré de liberté à l'objet mobile,
   - la mesure (54) par un capteur triaxial $C_i$ fixé sur le même objet mobile d'un vecteur $b_{mi}$ donnant la direction d'un second champ d'une grandeur physique au niveau du même point de mesure dans le même repère mobile, les premier et second champs étant représentés, en tout point d'un espace de travail à l'intérieur duquel sont limités les déplacements de l'objet mobile, par des vecteurs, respectivement $r_j$ et $r_i$, donnant la direction du champ en ce point, ces premier et second champs étant tels que les produits scalaire et vectoriel, dans le repère fixe, des vecteurs $r_i$ et $r_j$ normalisés sont connus en tout point de cet espace de travail,
   - la construction (58) d'un vecteur $b_{ej}$ correspondant à l'estimation de la mesure du capteur $C_j$ au niveau du point de mesure sans utiliser la mesure $b_{mj}$,
   - le calcul (60) de la différence entre les vecteurs $b_{ej}$ et $b_{mj}$ pour obtenir un vecteur de résidus ayant pour coordonnées le long de chaque axe du repère mobile un résidu correspondant à la différence entre les coordonnées des vecteurs $b_{ej}$ et $b_{mj}$ sur cet axe du repère mobile,
   - l'identification (62) du ou des axes de mesure du capteur $C_j$ présentant un défaut en fonction des résidus calculés sur chacun des axes du repère mobile,
   **caractérisé en ce que** la construction (58) du vecteur $b_{ej}$ est obtenue à partir :
   - des produits scalaire et vectoriel des vecteurs $r_i$ et $r_j$, et
   - de la mesure du vecteur $b_{mi}$,
   de manière à ce que la direction du vecteur $b_{ej}$ par rapport au vecteur $b_{mi}$ soit identique à la direction du vecteur $r_j$ par rapport au vecteur $r_i$.

2. Procédé selon la revendication 1, dans lequel l'identification (62) du ou des axes de mesure défaillant comporte la transformation (64) de chaque coordonnée du vecteur de résidus en une valeur booléenne codable sur un seul bit d'information en appliquant le test d'hypothèse de Neyman-Pearson pour obtenir un vecteur de symptôme, cette valeur booléenne indiquant dans un état la présence d'un défaut et dans l'autre état l'absence de défaut.

3. Procédé selon l'une quelconque des revendications précédentes, dans lequel l'estimation du vecteur $b_{ej}$ est construite (58) à partir des relations suivantes :

$$r_i . r_j = b_{mi} . b_{ej},$$

et

$$\| r_i \wedge r_j \| = \| b_{mi} \wedge b_{ej} \|,$$

   - $\|b_{ej}\| = \|r_j\|$ lorsque le premier champ de grandeur physique est tel que la norme $\|r_j\|$ est constante en tout point de l'espace de travail, ou $\|b_{ej}/b_{mi}\| = \|r_j/r_i\|$ lorsque les premier et second champs de grandeur physique sont tels que le rapport des amplitudes des vecteurs $r_i$ et $r_j$ en tout point de l'espace de travail est constant.
   où :
   - le symbole «.» est la fonction produit scalaire,
   - le symbole $\wedge$ est la fonction produit vectoriel, et
   - le symbole $\|...\|$ la norme euclidienne du vecteur.

4. Procédé selon l'une quelconque des revendications précédentes, dans lequel les axes du repère mobile sont confondus avec les axes de mesure du capteur $C_j$.

5. Procédé selon l'une quelconque des revendications précédentes, dans lequel le procédé comporte :

- la vérification de la relation suivante : $\|r_i\| = \|b_{mi}\|$ à $\pm \varepsilon \|r_i\|$ près, où $\varepsilon$ est une constante inférieure ou égale à 0,25 et $\|...\|$ désigne la norme du vecteur, et
- si cette relation n'est pas vérifiée, l'inhibition systématique de la construction du vecteurs $b_{ej}$ à partir des produits scalaire et vectoriel des vecteurs $r_i$ et $r_j$ et de la mesure du vecteur $b_{mi}$ et, dans le cas contraire, la construction du vecteurs $b_{ej}$.

6. Procédé selon l'une quelconque des revendications précédentes, dans lequel les premier et second champs sont des champs de deux grandeurs physiques différentes.

7. Procédé selon l'une quelconque des revendications 1 à 5, dans lequel les premier et second champs sont les mêmes champs de la même grandeur physique.

8. Procédé selon l'une quelconque des revendications précédentes, dans lequel les premier et second champs sont choisis dans le groupe composé du champ magnétique terrestre et du champ de gravité.

9. Procédé selon l'une quelconque des revendications précédentes, dans lequel les mesures par les capteurs $C_j$ et $C_i$ consiste à mesurer, respectivement, des premier et second champs tels que les produits scalaire et vectoriel, dans le repère fixe, des vecteurs $r_i$ et $r_j$ normalisés sont identiques en tout point de l'espace de travail.

10. Support (32) d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

11. Dispositif d'identification d'axes de mesure défaillants d'un capteur triaxial $C_j$ fixé sur un objet mobile dans un repère fixe, ce capteur triaxial $C_j$ mesurant un vecteur $b_{mj}$ donnant la direction d'un premier champ d'une grandeur physique au niveau d'un point de mesure dans un repère mobile fixé sans aucun degré de liberté à l'objet mobile, ce dispositif comportant :

- un capteur triaxial $C_i$ destiné à être fixé sur le même objet mobile, ce capteur triaxial $C_i$ étant apte à mesurer un vecteur $b_{mi}$ donnant la direction d'un second champ d'une grandeur physique au niveau du même point de mesure dans le même repère mobile, les premier et second champs étant représentés, en tout point d'un espace de travail à l'intérieur duquel sont limités les déplacements de l'objet mobile, par des vecteurs, respectivement $r_j$ et $r_i$, donnant la direction du champ en ce point, ces premier et second champs étant tels que les produits scalaire et vectoriel, dans le repère fixe, des vecteurs $r_i$ et $r_j$ normalisés sont connus en tout point de cet espace de travail,
- une unité (12) électronique de traitement apte à acquérir les mesures des capteurs $C_i$ et $C_j$, cette unité de traitement étant programmée pour :

• construire un vecteur $b_{ej}$ correspondant à l'estimation de la mesure du capteur $C_j$ au niveau du point de mesure sans utiliser la mesure $b_{mj}$,
• calculer la différence entre les vecteurs $b_{ej}$ et $b_{mj}$ pour obtenir un vecteur de résidus ayant pour coordonnées le long de chaque axe du repère mobile un résidu correspondant à la différence entre les coordonnées des vecteurs $b_{ej}$ et $b_{mj}$ sur cet axe du repère mobile,
• identifier le ou les axes de mesure du capteur $C_j$ présentant un défaut en fonction des résidus calculés sur chacun des axes du repère mobile,

**caractérisé en ce que** l'unité (12) de traitement est programmée pour construire le vecteur $b_{ej}$ à partir :
- des produits scalaire et vectoriel des vecteurs $r_i$ et $r_j$, et
- de la mesure du vecteur $b_{mi}$,
de manière à ce que la direction du vecteur $b_{ej}$ par rapport au vecteur $b_{mi}$ soit identique à la direction du vecteur $r_j$ par rapport au vecteur $r_i$.

**Patentansprüche**

1. Verfahren zur Identifizierung von fehlerhaften Messachsen eines dreiachsigen Sensors, der an einem beweglichen Objekt in einem festen Koordinatensystem befestigt ist, wobei dieses Verfahren aufweist:

- die Messung (54), durch einen an dem beweglichen Objekt befestigten dreiachsigen Sensor $C_j$, eines Vektors $b_{mj}$, der die Richtung eines ersten Feldes einer physikalischen Größe an einem Messpunkt in einem beweglichen Koordinatensystem angibt, das ohne jeden Freiheitsgrad an dem beweglichen Objekt befestigt ist,
- die Messung (54), durch einen an demselben beweglichen Objekt befestigten dreiachsigen

Sensor $C_i$, eines Vektors $b_{mi}$, der die Richtung eines zweiten Feldes einer physikalischen Größe an demselben Messpunkt in demselben beweglichen Koordinatensystem angibt, wobei das erste und das zweite Feld in jedem Punkt eines Arbeitsraumes, auf dessen Inneres die Ortsveränderungen des beweglichen Objekts begrenzt sind, durch Vektoren $r_j$ bzw. $r_i$ dargestellt sind, welche die Richtung des Feldes in diesem Punkt angeben, wobei dieses erste und dieses zweite Feld so beschaffen sind, dass das Skalarprodukt und das Vektorprodukt der normierten Vektoren $r_i$ und $r_j$ in dem festen Koordinatensystem in jedem Punkt dieses Arbeitsraumes bekannt sind,

- die Konstruktion (58) eines Vektors $b_{ej}$, welcher der Schätzung des Messwertes des Sensors $C_j$ an dem Messpunkt ohne Verwendung der Messung $b_{mj}$ entspricht,

- die Berechnung (60) der Differenz zwischen den Vektoren $b_{ej}$ und $b_{mj}$, um einen Vektor von Resten zu erhalten, welcher als Koordinaten entlang jeder Achse des beweglichen Koordinatensystems einen Rest hat, welcher der Differenz zwischen den Koordinaten der Vektoren $b_{ej}$ und $b_{mj}$ auf dieser Achse des beweglichen Koordinatensystems entspricht,

- die Identifizierung (62) der Messachse oder der Messachsen des Sensors $C_j$, die einen Fehler aufweist bzw. aufweisen, in Abhängigkeit von den an den einzelnen Achsen des beweglichen Koordinatensystems berechneten Resten,

**dadurch gekennzeichnet, dass** die Konstruktion (58) des Vektors $b_{ej}$ ausgehend von
- dem Skalarprodukt und dem Vektorprodukt der Vektoren $r_i$ und $r_j$, und
- der Messung des Vektors $b_{mi}$

erhalten wird, derart, dass die Richtung des Vektors $b_{ej}$ bezüglich des Vektors $b_{mi}$ mit der Richtung des Vektors $r_j$ bezüglich des Vektors $r_i$ identisch ist.

2. Verfahren nach Anspruch 1, wobei die Identifizierung (62) der fehlerhaften Messachse oder Messachsen die Transformation (64) jeder Koordinate des Vektors von Resten in einen mit einem einzigen Informationsbit codierbaren Booleschen Wert beinhaltet, indem der Hypothesentest nach Neyman-Pearson angewendet wird, um einen Symptomvektor zu erhalten, wobei dieser Boolesche Wert in einem Zustand das Vorhandensein eines Fehlers und in dem anderen Zustand das Nichtvorhandensein eines Fehlers angibt.

3. Verfahren nach einem der vorhergehenden Ansprüche, wobei die Schätzung des Vektors $b_{ej}$ ausgehend von den folgenden Beziehungen konstruiert (58) wird:

-

$$r_i \cdot r_j = b_{mi} \cdot b_{ej},$$

und

-

$$\| r_i \wedge r_j \| = \| b_{mi} \wedge b_{ej} \|,$$

- $\|b_{ej}\| = \|r_j\|$, wenn das erste Feld einer physikalischen Größe so beschaffen ist, dass die Norm $\|r_j\|$ in allen Punkten des Arbeitsraumes konstant ist, oder $\|b_{ej}/b_{mi}\| = \|r_j/r_i\|$, wenn das erste und das zweite Feld einer physikalischen Größe so beschaffen sind, dass das Verhältnis der Amplituden der Vektoren $r_i$ und $r_j$ in allen Punkten des Arbeitsraumes konstant ist,
wobei:
- das Symbol "•" die Funktion "Skalarprodukt" bezeichnet,
- das Symbol "∧" die Funktion "Vektorprodukt" bezeichnet, und
- das Symbol $\|...\|$ die Euklidische Norm des Vektors bezeichnet.

4. Verfahren nach einem der vorhergehenden Ansprüche, wobei die Achsen des beweglichen Koordinatensystems mit den Messachsen des Sensors $C_j$ zusammenfallen.

5. Verfahren nach einem der vorhergehenden Ansprüche, wobei das Verfahren aufweist:

- die Überprüfung der folgenden Beziehung: $\|r_i\|$ = $\|b_{mi}\|$ bis auf $\pm \varepsilon \|r_i\|$ genau, wobei $\varepsilon$ eine Konstante ist, die kleiner oder gleich 0,25 ist, und $\|...\|$ die Norm des Vektors bezeichnet, und
- falls diese Beziehung nicht erfüllt ist, die systematische Unterdrückung der Konstruktion des Vektors $b_{ej}$ ausgehend von dem Skalarprodukt und dem Vektorprodukt der Vektoren $r_i$ und $r_j$ und dem Messwert des Vektors $b_{mi}$, und im entgegengesetzten Fall die Konstruktion des Vektors $b_{ej}$.

6. Verfahren nach einem der vorhergehenden Ansprüche, wobei das erste und das zweite Feld Felder von verschiedenen physikalischen Größen sind.

7. Verfahren nach einem der Ansprüche 1 bis 5, wobei das erste und das zweite Feld dieselben Felder derselben physikalischen Größe sind.

8. Verfahren nach einem der vorhergehenden Ansprüche, wobei das erste und das zweite Feld aus der Gruppe ausgewählt sind, die aus dem Magnetfeld der Erde und dem Schwerkraftfeld besteht.

9. Verfahren nach einem der vorhergehenden Ansprüche, wobei die Messungen durch die Sensoren $C_j$ und $C_i$ darin bestehen, ein erstes bzw. ein zweites Feld zu messen, derart, dass das Skalarprodukt und das Vektorprodukt der normierten Vektoren $r_i$ und $r_j$ in dem festen Koordinatensystem in allen Punkten des Arbeitsraumes identisch sind.

10. Informationsaufzeichnungsmedium (32), **dadurch gekennzeichnet, dass** es Anweisungen zur Ausführung eines Verfahrens nach einem der vorhergehenden Ansprüche aufweist, wenn diese Anweisungen durch einen elektronischen Rechner ausgeführt werden.

11. Vorrichtung zur Identifizierung von fehlerhaften Messachsen eines dreiachsigen Sensors $C_j$, der an einem beweglichen Objekt in einem festen Koordinatensystem befestigt ist, wobei dieser dreiachsige Sensor $C_j$ einen Vektor $b_{mj}$ misst, der die Richtung eines ersten Feldes einer physikalischen Größe an einem Messpunkt in einem beweglichen Koordinatensystem angibt, das ohne jeden Freiheitsgrad an dem beweglichen Objekt befestigt ist, wobei diese Vorrichtung aufweist:

    - einen dreiachsigen Sensor $C_i$, der dazu bestimmt ist, an demselben beweglichen Objekt befestigt zu werden, wobei dieser dreiachsige Sensor $C_i$ geeignet ist, einen Vektor $b_{mi}$ zu messen, der die Richtung eines zweiten Feldes einer physikalischen Größe an demselben Messpunkt in demselben beweglichen Koordinatensystem angibt, wobei das erste und das zweite Feld in jedem Punkt eines Arbeitsraumes, auf dessen Inneres die Ortsveränderungen des beweglichen Objekts begrenzt sind, durch Vektoren $r_j$ bzw. $r_i$ dargestellt sind, welche die Richtung des Feldes in diesem Punkt angeben, wobei dieses erste und dieses zweite Feld so beschaffen sind, dass das Skalarprodukt und das Vektorprodukt der normierten Vektoren $r_i$ und $r_j$ in dem festen Koordinatensystem in jedem Punkt dieses Arbeitsraumes bekannt sind,
    - eine elektronische Verarbeitungseinheit (12), die geeignet ist, die Messwerte der Sensoren $C_i$ und $C_j$ zu erfassen, wobei diese Verarbeitungseinheit dafür programmiert ist:

        • einen Vektor $b_{ej}$ zu konstruieren, welcher der Schätzung des Messwertes des Sensors $C_j$ an dem Messpunkt ohne Verwendung der Messung $b_{mj}$ entspricht,
        • die Differenz zwischen den Vektoren $b_{ej}$ und $b_{mj}$ zu berechnen, um einen Vektor von Resten zu erhalten, welcher als Koordinaten entlang jeder Achse des beweglichen Koordinatensystems einen Rest hat, welcher der Differenz zwischen den Koordinaten der Vektoren $b_{ej}$ und $b_{mj}$ auf dieser Achse des beweglichen Koordinatensystems entspricht,
        • die Messachse oder die Messachsen des Sensors $C_j$, die einen Fehler aufweist bzw. aufweisen, in Abhängigkeit von den an den einzelnen Achsen des beweglichen Koordinatensystems berechneten Resten zu identifizieren,

    **dadurch gekennzeichnet, dass** die Verarbeitungseinheit (12) dafür programmiert ist, den Vektor $b_{ej}$ ausgehend von
    - dem Skalarprodukt und dem Vektorprodukt der Vektoren $r_i$ und $r_j$, und
    - der Messung des Vektors $b_{mi}$

zu konstruieren, derart, dass die Richtung des Vektors $b_{ej}$ bezüglich des Vektors $b_{mi}$ mit der Richtung des Vektors $r_j$ bezüglich des Vektors $r_i$ identisch ist.

**Claims**

1. Method for identifying faulty measurement axes of a triaxial sensor fixed onto a moving object in a fixed reference frame, this method comprising:

    - the measurement (54) by a triaxial censor $C_j$ fixed onto the moving object of a vector $b_{mj}$ giving the direction of a first field of a physical quantity at a measurement point in a moving reference frame fixed with no degree of freedom to the moving object,
    - the measurement (54) by a triaxial censor $C_i$ fixed onto the same moving object of a vector $b_{mi}$ giving the direction of a second field of a physical quantity at the same measurement point in the same moving reference frame, the first and second fields being represented, at any point of a working space inside which the movements of the moving object are limited, by vectors, respectively $r_j$ and $r_i$, giving the direction of the field at that point, these first and second fields being such that the scalar and vector products, in the fixed reference frame, of the normalized vectors $r_i$ and $r_j$ are known at any point of this working space,
    - the construction (58) of a vector $b_{ej}$ corresponding to the estimation of the measurement of the sensor $C_j$ at the measurement point without using the $b_{mj}$ measurement,
    - the computation (60) of the difference between the vectors $b_{ej}$ and $b_{mj}$ to obtain a residual values vector whose coordinates along each axis of the moving reference frame are a residual value corresponding to the difference between the coordinates of the vectors $b_{ej}$ and $b_{mj}$ on this axis of the moving reference frame,
- the identification (62) of the measurement axis or axes of the sensor $C_j$ exhibiting a fault as a function of the residual values computed on each of the axes of the moving reference frame, **characterized in that** the construction (58) of the vector $b_{ej}$ is obtained from:
- the scalar and vector products of the vectors $r_i$ and $r_j$, and
- of the measurement of the vector $b_{mi}$,

such that the direction of the vector $b_{ej}$ relative to the vector $b_{mi}$ is identical to the direction of the vector $r_j$ relative to the vector $r_i$.

2. Method according to Claim 1, in which the identification (62) of the faulty measurement axis or axes comprises the transformation (64) of each coordinate of the vector of residual values into a Boolean value that can be coded on a single information bit by applying the Neyman-Pearson hypothesis test to obtain a symptom vector, this Boolean value indicating, in one state, the presence of a fault, and, in the other state, the absence of a fault.

3. Method according to any one of the preceding claims, in which the estimation of the vector $b_{ej}$ is constructed (58) from the following relationships:

$$r_i . r_j = b_{mi} . b_{ej},$$

and

$$- \| r_i \wedge r_j \| = \| b_{mi} \wedge b_{ej} \|,$$

- $\|b_{ej}\| = \|r_j\|$ when the first physical quantity field is such that the norm $\|r_j\|$ is constant at any point of the working space, or $\|b_{ej}/b_{mi}\| = \|r_j/r_i\|$ when the first and second physical quantity fields are such that the ratio of the amplitudes of the vectors $r_i$ and $r_j$ at any point of the working space is constant,
in which:
- the symbol «.» is the scalar product function,
- the symbol $\Lambda$ is the vector product function, and
- the symbol $\|...\|$ is the euclidean norm of the vector.

4. Method according to any one of the preceding claims, in which the axes of the moving reference frame are merged with the measurement axes of the sensor $C_j$.

5. Method according to any one of the preceding claims, in which the method comprises:

- the verification of the following relationship: $\|r_j\| = \|b_{mi}\|$ to within $\pm \varepsilon \|r_j\|$ in which $\varepsilon$ is a constant less than or equal to 0.25 and $\|...\|$ designates the norm of the vector, and
- if this relationship is not verified, the systematic inhibiting of the construction of the vectors $b_{ej}$ from the scalar and vector products of the vectors $r_i$ and n and of the measurement of the vector $b_{mi}$ and, otherwise, the construction of the vectors $b_{ej}$.

6. Method according to any one of the preceding claims, in which the first and second fields are fields of two different physical quantities.

7. Method according to any one of Claims 1 to 5, in which the first and second fields are the same fields of the same physical quantity.

8. Method according to any one of the preceding claims, in which the first and second fields are chosen from the group consisting of the Earth's magnetic field and of the field of gravity.

9. Method according to any one of the preceding claims, in which the measurements by the sensors $C_j$ and $C_i$ consist in measuring, respectively, first and second fields such as the scalar and vector products, in the fixed reference frame, of the normalized vectors $r_i$ and $r_j$ are identical at any point of the working space.

10. Information storage medium (32), **characterized in that** it comprises instructions for the execution of a method according to any one of the preceding claims, when these instructions are executed by an electronic computer.

11. Device for identifying faulty measurement axes of a triaxial sensor $C_j$ fixed onto a moving object in a fixed reference frame, this triaxial sensor $C_j$ measuring a vector $b_{mj}$ giving the direction of a first field of a physical quantity at a measurement point in a moving reference frame that is fixed with no degree of freedom to the moving object, this device comprising:

- a triaxial sensor $C_i$ intended to be fixed onto the same moving object, this triaxial sensor $C_i$ being suitable for measuring a vector $b_{mi}$ giving the direction of a second field of a physical quantity at the same measurement point in the same moving reference frame, the first and second fields being represented, at any point of a working space within which the movements of the moving object are limited, by vectors, respectively $r_j$ and $r_i$, giving the direction of the field at this point, these first and second fields being such that the scalar and vector products, in the fixed reference frame, of the normalized vectors $r_i$ and $r_j$ are known at any point of this working space,

- an electronic processing unit (12) suitable for acquiring the measurements of the sensors $C_i$ and $C_j$, this processing unit being programmed to:

    • construct a vector $b_{ej}$ corresponding to the estimation of the measurement of the sensor $C_j$ at the measurement point without using the $b_{mj}$ measurement,
    • compute the difference between the vectors $b_{ej}$ and $b_{mj}$ to obtain a vector of residual values whose coordinates along each axis of the moving reference frame are a residual value corresponding to the difference between the coordinates of the vectors $b_{ej}$ and $b_{mj}$ on this axis of the moving reference frame,
    • identify the measurement axis or axes of the sensor $C_j$ exhibiting a fault as a function of the residual values computed on each of the axes of the moving reference frame,

**characterized in that** the processing unit (12) is programmed to construct the vector $b_{ej}$ from:
- the scalar and vector products of the vectors $r_i$ and $r_j$, and
- the measurement of the vector $b_{mi}$,
in such a way that the direction of the vector $b_{ej}$ relative to the vector $b_{mi}$ is identical to the direction of the vector $r_j$ relative to the vector $r_i$.

Fig. 1

Fig. 2

Fig. 3

Fig. 4

Fig. 5

Fig. 6

Fig. 7

Fig. 8

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2777365 A1

**Littérature non-brevet citée dans la description**

- **C. BERBRA ; S. GENTIL ; S. LESECQ.** Identification of multiple faults in an Inertial Measurement Unit. *7th Workshop on advanced control and diagnosis (ACD'2009),* Novembre 2009
- **NGUYEN H V et al.** Diagnosis of an inertial measurement unit based on set membership estimation. *Control and Automation, 2009, Med « 09 », 17ième Mediteranean Conférence,* 24 Juin 2009, 211-216

- **MICHÈLE BASSEVILLE ; IGOR V. NIKIFOROV.** Detection of Abrupt Changes - Theory and Application. Prentice-Hall, Inc, Avril 1993
- Traitement du signal pour le diagnosric. **S. LESECQ.** Supervision des procédés complexes. 2007
- **W. H. STEYN ; M. J. JACOBS ; P. J. OOSTHUIZEN.** A High Performance Star Sensor System for Full Attitude Determination on a Microsatellite. Department of Electronic Engineering